# EUROPEAN PATENT APPLICATION

(11) **EP 1 239 694 A2**
(43) Date of publication of application: **11.09.2002**
(21) Application number: 01303281.8
(22) Date of filing: 06.04.2001
(51) Int. Cl.: H04Q 11/00

(54) **Optical traffic grooming**

(30) Priority: 06.03.2001 US 800966
(71) Applicant: Redfern Broadband Networks Pty Ltd, Eveleigh, New South Wales 1430 (AU); Redfern Broadband Networks Inc., Wilmington, County of Newcastle, Delaware, 19801 (US)
(72) Inventor: Lauder, Richard, Maroubra, New South Wales, 2035 (AU); Halgren,Ross, Collaroy Plateau, New South Wales,2097 (AU)
(74) Representative: Samuels, Adrian James

(57) **Abstract**

A network hub structure for connecting network elements of a first WDM network (106;600) supporting a first bit rate WDM data stream to other network elements (624,626) on a second optical network (602) supporting a second bit rate data stream which is substantially a multiple *n* of the first bit rate, the hub structure comprising a multiplexing system comprising a plurality of multiplexing units (314), each multiplexing unit being arranged to multiplex *n* first WDM data streams into one second data stream, and a switching unit (108,110;518) arranged, in use, to selectively cross connect any *n* first WDM data streams originating from one or more of the network elements of the WDM network destined for any same one of said other network elements to one of the multiplexing units for multiplexing into one said second data stream.

## Description

### Field of the invention

The present invention relates broadly to a method and apparatus for connecting network elements between optical networks supporting different bit rate data streams.

### Background of the invention

In optical networks it is often required to forward traffic from multiple separate users received at a core node of e.g. a metro dense wavelength division multiplexing (DWDM) networks onto another long-haul network using a different bit rate data stream than the metro DWDM network.

In designing a system that facilitates such connectivity it must also be considered that subscribers (i.e. users) will need to communicate to different locations on the long-haul network.

At least preferred embodiments of the present invention seek to provide a method and apparatus for facilitating such connectivity in optical networks.

### Summary of the invention

In accordance with a first aspect of the present invention there is provided a network hub structure for connecting network elements of a first WDM network supporting a first bit rate WDM data stream to other network elements on a second optical network supporting a second bit rate data stream which is substantially a multiple *n* of the first bit rate; the hub structure comprising a multiplexing system comprising a plurality of multiplexing units, each multiplexing unit being arranged to multiplex *n* first WDM data streams into one second data stream, and a switching unit arranged, in use, to selectively cross connect any *n* first WDM data streams originating from one or more of the network elements of the WDM network destined for any same one of said other network elements to one of the multiplexing units for multiplexing into one said second data stream.

In a preferred embodiment, the first bit rate WDM data streams are 1 Gbit/s Gigabit Ethernet data streams, and the second bit rate data streams are 2.488 Gbit/s SONET/SDH (OC48) data streams.

Each multiplexing unit may comprise a 2xGbE/OC48 Packet Over SONET (POS) multiplexer unit.

In another embodiment, each multiplexing unit may comprise a SONET time division multiplexing (TDM) multiplexer unit. Advantageously, the SONET TDM multiplexer units are arranged, in use, to first decode 1.25 Gbit/s 8b/10b encoded GbE streams to produce two 1 Gbit/s streams, and to then multiplex the two 1 Gbit/s streams into SONET Virtual Containers. Alternatively, the SONET TDM multiplexer units may be arranged, in use, to first decode the 1.25 Gbit/s 8b/10b encoded GbE streams to produce two 1 Gbit/s streams, and to then multiplex the two 1 Gbit/s streams into a SONET frame in alternate time slots. In such an embodiment, the SONET TDM multiplexer units are preferably arranged in a manner such that, in use, additional filler bytes are being inserted to match to the capacity of the SONET frame.

The SONET TDM multiplexer units may further be arranged in a manner such that, in use, the decoded GbE streams are being re-encoded utilising a 5b/6b line code to produce 1.2 Gbit/s streams, before employing the multiplexing into the 2.488 Gbit/s OC 48 data streams.

Each multiplexing unit is preferably arranged to de-multiplex an incoming second data stream from the second network into *n* outgoing first WDM data streams destined for network elements on the first WDM network, and the switching unit is arranged to cross connect said outgoing first WDM data streams to a WDM unit if the network hub structure for multiplexing the outgoing first WDM data streams onto the first WDM network.

Each multiplexing unit advantageously comprises a tagging unit for tagging each first WDM data stream, and for allocating a wavelength to each outgoing first WDM data stream based on tags on the incoming second data streams.

Preferably, each multiplexing unit is incorporated in a Line Interface Card interfacing to a core hub on the second network.

The network hub structure may further comprise a plurality of Trunk Interface Cards disposed before the switching unit for interfacing to the first WDM network.

The network hub structure advantageously further comprises a redundant switching unit for fault protection, the redundant switching unit being arranged, in case of a fault in the primary switching unit, to selectively cross connect the any *n* first WDM data streams originating from one or more of the network elements of the WDM network destined for the any same one of said other network elements to the one of the multiplexing units for multiplexing into one said second data stream.

The second network may be a second WDM network.

In accordance with a second aspect of the present invention there is provided a method for connecting network elements of a first WDM network supporting a first bit rate WDM data stream to other network elements on a second optical network supporting a second bit rate data stream which is substantially a multiple *n* of the first bit rate; the method comprising the steps of selectively multiplexing any *n* first WDM data streams originating from one or more of the network elements of the WDM network destined for any same one of said other network elements into one said second data stream.

In a preferred embodiment, the first bit rate WDM data streams are 1 Gbit/s Gigabit Ethernet data streams, and the second bit rate data streams are 2.488 Gbit/s SONET/SDH (OC48) data streams.

The method preferably further comprises the step of de-multiplexing an incoming second data stream from the second network into *n* outgoing first WDM data streams destined for one or more network elements on the first WDM network and multiplexing the outgoing first WDM data streams onto the first WDM network.

The method advantageously comprises the step of tagging each first WDM data stream, and allocating a wavelength to each outgoing first WDM data stream based on tags on the incoming second data streams.

### Brief description of the drawings

Preferred forms of the present invention will now be described, by way of example only, with reference to the accompanying drawings.

Figure 1 is a schematic drawing illustrating a core hub structure embodying the present invention.

Figure 2 is a schematic drawing illustrating a Gigabit Ethernet Trunk Interface Card embodying the present invention.

Figure 3 is a schematic drawing illustrating an OC48/2xGbE Line Interface Card embodying the present invention.

Figure 4 is a schematic drawing illustrating the main functional components of an OC48/2xGbE Multiplexing Unit.

Figure 5 is a functional block diagram of a core hub structure embodying the present invention.

Figure 6 is a schematic drawing illustrating the connectivity between a metro ring network and a core network facilitated through the core hub structure of Figure 1.

### Detailed description of the embodiments

In the preferred embodiments described, a core hub structure is provided which facilitates connecting network elements of a metro network supporting a first bit rate data stream to other network elements on a core network supporting a second bit rate data stream which is substantially a multiple *n* of the first bit rate data stream, which makes it possible for different customers on the metro network to communicate to different locations on the long-haul network.

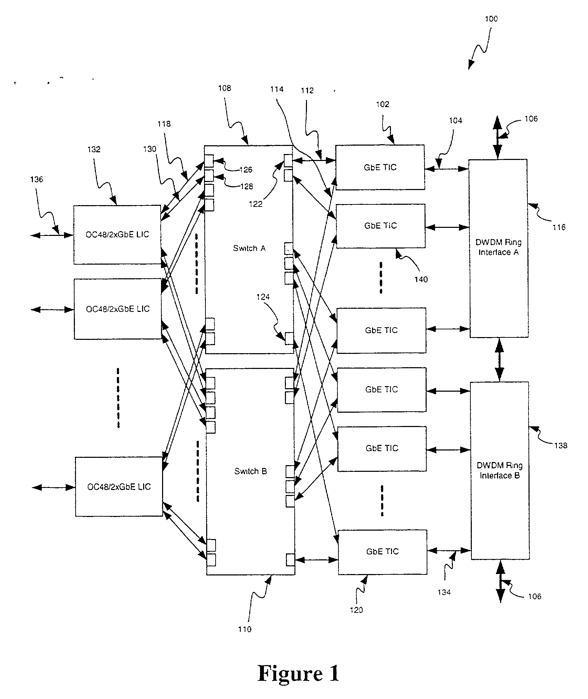

In the core hub structure 100 shown in Figure 1, 32 GbE Trunk Interface Cards (TICs) e.g. 102 are fitted to transmit and receive 32 full-duplex GbE streams, e.g. 104, out of a DWDM multiplexed Metro backbone fibre ring 106. The 32 GbE streams originate from network elements (not shown) on the Metro backbone fibre ring network 16. The functions of each GbE TIC e.g. 102 are to receive and regenerate the incoming GbE DWDM channel of the full duplex stream e.g. 104, to transmit the outgoing GbE DWDM channel of the full-duplex stream e.g. 104, and to connect the full duplex GbE stream to one of two redundant cross-connect switches 108, 110, via one of two intra-office optical interconnects 112, 114. Note that in the structure 100 shown in Figure 1, Switch A 108 is the primary switch, that is used in normal operation, whereas Switch B 110 is a secondary switch that is provided for protection, and which will be used in case of a failure in Switch A 108.

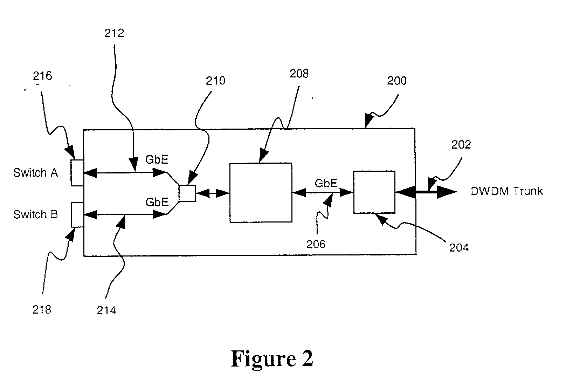

Figure 2 shows the structure 200 of a GbE TIC e.g. 102 in the form of a functional block diagram. A full duplex DWDM GbE stream 202 is connected from the DWDM network 106 (Figure 1) to a DWDM transceiver 204. The transceiver 204 may comprise a broadband receiver such as e.g. a semiconductor PIN detector, to receive the incoming GbE channel. The transceiver 204 may further comprise a suitable single-frequency DWDM laser for transmission of the outgoing DWDM GbE signal into the network via the DWDM Ring Interface e.g 116 (Figure 1). Depending upon factors such as, e.g. the maximum transmission distance, this laser may be a relatively low-cost device, such as a directly modulated, temperature-stabilised distributed feedback (DFB) semiconductor laser. Alternatively the laser may be a more costly, higher-performance device, such as a DFB semiconductor laser incorporating an integrated external electro-absorption modulator (DFB-EA), and active wavelength stabilisation, in order to achieve longer transmission distance, or more closely spaced DWDM channels. In a further alternative embodiment, the DWDM laser source may be provided separately from the modulator.

The DWDM transceiver 204 is connected to a GbE regenerator unit 208 via an electrical connection 206. The GbE regenerator unit 208 may comprise circuits that perform data regeneration and retiming, i.e. clock and data recovery, in one or both directions of the full-duplex GbE stream. The regenerator unit 208 is further connected to an electronic switch 210 which switches the GbE stream to one of two paths 212, 214. Each path is connected in use to one of two redundant cross-connect switches e.g. 108, 110 (Figure 1). The connections to the switches are via short-haul intra-office optical interconnects, e.g. 112, 114 (Figure 1). Thus the GbE TIC comprises two further intra-office optical transceivers 216, 218. The intra-office optical transceivers may comprise e.g. 850 nm multimode GbE optical transceivers.

Returning now to Figure 1, and considering first the connections via the primary cross-connect switch 108. The primary cross-connect switch 108 may be either of an all optical (OOO) type, in which case the switching is performed using an optical switch matrix, or it may be of an optical-electronic-optical (OEO) type, in which case the optical signals e.g. 112, are converted back into electrical form via an optical transceiver, and then switched using an electronic switch matrix, before being converted back into optical form via a second optical transceiver. In the embodiment 100 shown, the cross-connect switch 108 comprises at least a 64x64 switch matrix (i.e. having 64 input ports and 64 output ports).

The cross-connect switch 108 has the capability to connect any two GbE streams coming from two GbE TIC's e.g. 102, 120 and entering the switch 108 at e.g. ports 122 and 124 to any of 32 output ports e.g. 126, 128 wherein each pair of optical connections e.g. 118, 130 is connected to one of 16 OC48/2xGbE Line Interface Cards (LICs) e.g. 132.

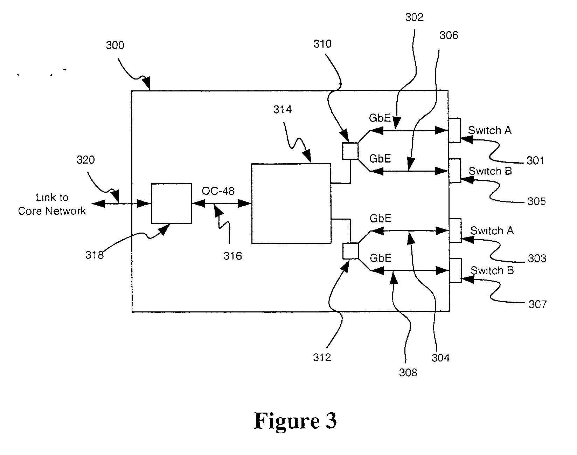

Figure 3 shows the structure 300 of an OC48/2xGbE LIC e.g. 132 (Figure 1) in the form of a functional block diagram. Two full-duplex GbE streams 302, 304 are connected to the LIC 300 from the primary switch 108 (Figure 1) via intra-office optical transceivers 301, 303. The intra-office optical transceivers 301, 303 may comprise e.g. 850 nm multimode GbE optical transceivers. Additional connections 306, 308 are provided to the secondary switch 110 (Figure 1) via intra-office optical transceivers 305, 307. Electronic switches 310, 312 are provided to enable the streams to be switched from the primary connections 302, 304 to the secondary connections 306, 308 in case of a failure of the primary switch 108 (Figure 1).

The two GbE streams selected by the switches 310, 312 are connected to an OC48/2xGbE multiplexing unit 314 that combines them into a single full-duplex 2.488 Gbit/s OC48 stream 316. The OC48 stream 316 is connected to a further optical transceiver 318, which is connected via an optical link 320 to the core network terminal equipment. The optical link 320 may comprise e.g. a SONET/SDH OC48 short haul intra-office connection operating at a nominal wavelength of 1310 nm over single-mode fibre. Accordingly, the optical transceiver 318 may comprise a suitable 1310 nm laser transmitter and PIN photo-receiver, as specified in the relevant SONET/SDH standards documents.

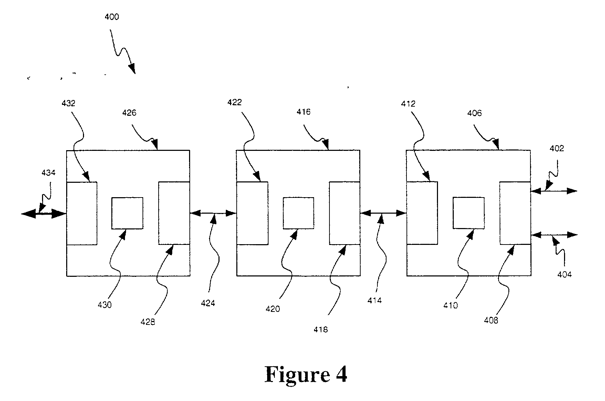

Figure 4 shows a block diagram 400 of an exemplary embodiment of an OC48/2xGbE multiplexing unit e.g. 314, based on an application note provided in the product literature for the PMC-Sierra PM3386 S/UNI®-2xGE Dual Gigabit Ethernet Controller. The multiplexing unit 400 comprises three main components, being a dual Gigabit Ethernet controller 406, interface logic 416, and a 2.488 Gbit/s SONET/SDH user network interface device 426. The dual Gigabit Ethernet controller 406 may comprise e.g. a PMC-Sierra PM3386 S/UNI®-2xGE Dual Gigabit Ethernet Controller integrated circuit (IC). The interface logic 416 may be implemented using e.g. a field programmable gate array (FPGA) device. The 2.488 Gbit/s SONET/SDH user network interface device 426 may comprise e.g. a PMC-Sierra PM5381 S/UNI® SATURN® User Network Interface IC. It will be appreciated by a person skilled in the art that another chip-set may be used, e.g. a chip set that could provide a choice between 2xGbE/OC48 grooming and 4xOC12/OC48 grooming.

The dual Gigabit Ethernet controller 406 includes a serialiser/deserialiser unit 408 for converting the two GbE streams 402, 404 between serial and parallel formats. The dual Gigabit Ethernet controller 406 further includes a dual GbE Medium Access Control (MAC) unit for transmitting and receiving GbE packets on the two, GbE streams 402, 404. The dual Gigabit Ethernet controller 406 further includes a Packet-Over-SONET Physical layer (POS-PHY) level 3 (PL3) Slave unit 412 for transmitting and receiving packets over the standard PL3 channel 414. The dual Gigabit Ethernet controller 406 further provides an in-band addressing function that enables the source port of each packet to be identified.

The interface logic 416 includes two PL3 Master units 418, 422 for transmitting and receiving packets on the two standard PL3 channels 414, 424 connected to the dual Gigabit Ethernet controller 406 and the 2.488 Gbit/s SONET/SDH user network interface device 426. The interface logic further includes a buffering and processing functional unit 420, that provides a first-in first-out (FIFO) buffer function for data passing between the dual Gigabit Ethernet controller 406 and the SONET/SDH user network interface device 426. The buffering and processing functional unit 420 further provides an Ethernet over SONET/SDH (EOS) processing function. The EOS processing function may use the in-band addressing function of the Dual Gigabit Ethernet controller 406 to tag packets and ensure that they exit by the correct GbE port at the destination network element.

The 2.488 Gbit/s SONET/SDH user network interface device 426 includes a PL3 Slave unit 428 for transmitting and receiving packets over the standard PL3 channel 424. The user network interface device 426 further includes a SONET/SDH processing unit that provides SONET/SDH framing and path overhead functionality. The user network interface device 426 further includes a serialiser/deserialiser unit 432 for converting the 2.488 Gbit/s SONET/SDH stream 434 between parallel and serial formats.

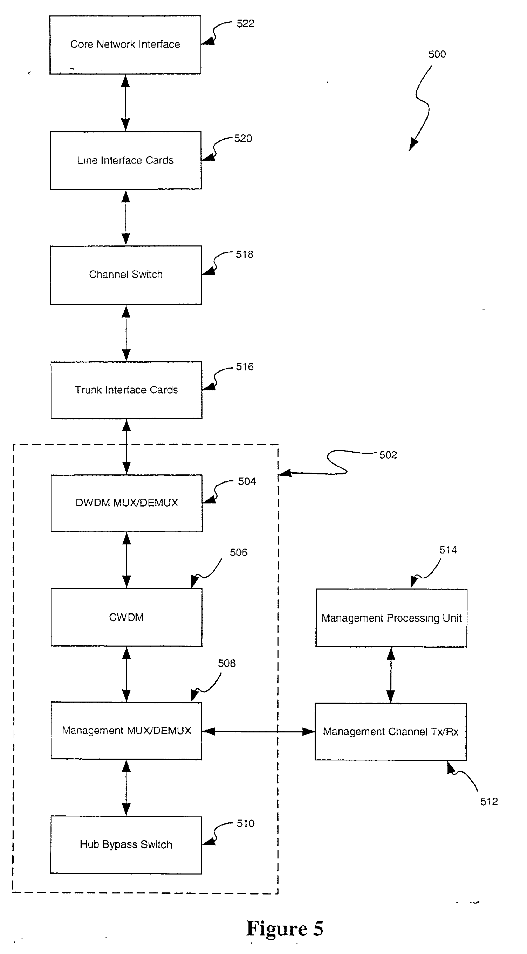

Returning now to Figure 1, each DWDM Ring interface 116, 138 provides for the multiplexing of 16 DWDM channels onto the metro DWDM network 106. Figure 5 shows an alternative representation 500 of the functional blocks that comprise the core hub 100. The DWDM Ring Interface 502 includes a DWDM Multiplexer/Demultiplexer (MUX/DEMUX) Unit 504, a Coarse WDM (CWDM) Unit 506, a Management Channel MUX/DEMUX 508 and a Hub Bypass Switch 510. The Hub Bypass Switch 510 provides the physical connection to the metro ring network, and enables the hub to be physically disconnected from the network. The Management MUX/DEMUX Unit 508 is used to add and drop a single wavelength (at around 1510 nm in the exemplary embodiment) that is used as a network management channel. The data on the network management channel is processed by a Management Processing Unit 514, connected to a Management Channel Tx/Rx Unit 512 that is used to transmit and receive the 1510 nm optical management channel. The CWDM Unit 506 adds and drops a specific band of wavelengths corresponding to the 16 DWDM channels multiplexed by the DWDM Ring Interface 502, while expressing all other wavelengths back onto the metro DWDM network. The DWDM MUX/DEMUX Unit 504 is used to multiplex and demultiplex the individual DWDM channels within this band. The DWDM MUX/DEMUX Unit 504 is connected to the Trunk Interface Cards 516, the Channel Switch 518, the Line Interface Cards 520 and on to the Core Network Interface 522, as already described with reference to Figure 1.

The exemplary embodiment described above comprises 16 full-duplex channels at each of two DWDM Ring Interfaces 116, 138 each comprising 16 transmitted (Tx) wavelengths and 16 received (Rx) wavelengths, i.e. a total of 32 different wavelengths. However, it will be appreciated that a greater or smaller number of channels could be accommodated, and/or a greater or smaller number of DWDM Ring Interfaces provided, without departure from the scope of the present invention.

It will thus be appreciated that the exemplary embodiment 100 shown in Figure 1 enables any individual full-duplex GbE channel e.g. 104 received via the metro DWDM network 106 to be switched between the corresponding GbE TIC e.g. 102, and any GbE channel e.g. 118 connected to any OC48/2xGbE LIC e.g. 132.

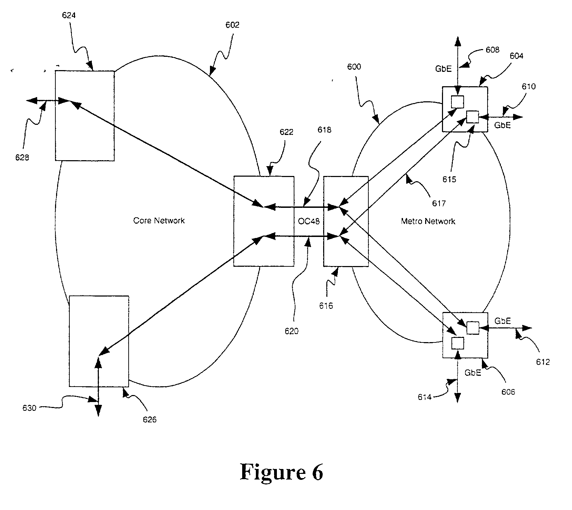

Further, any two individual full-duplex GbE channels e.g. 104, 134 received via the metro DWDM network 106 may be switched between the corresponding GbE TIC's e.g. 102, 120 and any OC48/2xGbE LIC e.g. 132, where they are combined into a single 2.488 Gbit/s SONET/SDH OC48 channel e.g. 136. This is further illustrated in Figure 6, in which a metro DWDM network 600 is shown interconnected to a core network 602. Two exemplary metro hubs 604, 606 are shown, each of which has two subscriber GbE connections, 608 and 610 connected to the first metro hub 604, and 612 and 614 connected to the second metro hub 606. Each subscriber GbE connection e.g. 610 is interfaced to the metro DWDM network 600 via a GbE TIC e.g. 615. Accordingly, the connections between the metro hubs e.g. 604 and the core hub 616 of the metro DWDM network 620 is provided via DWDM channel connections e.g. 617.

In the exemplary case shown in Figure 6, a first GbE channel 608 from the first metro hub 604 is combined at the core hub 616 with a second GbE channel 612 from the second metro hub 606 to form a first OC48 channel 618. Additionally, a third GbE channel 610 from the first metro hub 604 is combined at the core hub 616 with a fourth GbE channel 614 from the second metro hub 606 to form a second OC48 channel 620. The OC48 channels 618, 620 are transmitted via short-haul intra-office links to the first core network terminal unit 622, from which they are transmitted via the core network 602 to second and third core network terminal units 624, 626 respectively.

Network elements 624 and/or 626 located on the core network 602 may in turn be connected to core hubs interfacing to another metro network, and the GbE data streams e.g. 608, 610, 612, 614 may be destined to different metro network elements on that other metro network. The OC48 data streams e.g. 618, 620 may thus be received at the network elements 624 and/or 626 and transmitted as indicated by arrows 628. 630 to corresponding metro network core hubs (not shown), where they are demultiplexed into the corresponding GbE data streams 608, 610, 612, 614, which are then connected through to their respective destination metro network elements on the other metro networks.

Returning again to Figure 1, it will be appreciated that additionally, any individual full-duplex GbE channel e.g. 104 received via the metro DWDM network 106 may be switched from the corresponding GbE TIC to any other GbE TIC, e.g. 120, from which it may be transmitted back into the metro DWDM network 106 via a different DWDM channel e.g. 134.

It will further be appreciated that the provision of a second redundant switch 110, along with the switching capability provided by each TIC and LIC enables the core hub 100 to continue operating even if one of the cross-connect switches fails. Thus the core hub 100 has no single point of failure that may cause all channels to be disconnected.

Accordingly, the exemplary embodiment shown in Figure 1 is able to provide a highly fault-tolerant grooming function for GbE channels that enables each individual channel to be independently switched between any source and any destination either on the metro DWDM network or across the core transport network, while making optimum use of the 2.488 Gbit/s transmission capacity provided by the SONET/SDH OC48 channels provided by the core network.

It will be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

For example it will be appreciated that the grooming of 32 GbE streams into 16 OC48 streams is an exemplary configuration only.

Furthermore, the present invention is not limited to GbE into OC48 grooming, but may applied for other data streams, including 4xOC12 into OC48 or 16xOC3 into OC48.

## Claims

1. A network hub structure for connecting network elements of a first WDM network (106;600) supporting a first bit rate WDM data stream to other network elements (624,626) on a second optical network (602) supporting a second bit rate data stream which is substantially a multiple *n* of the first bit rate; the hub structure comprising:
- a multiplexing system comprising a plurality of multiplexing units (314), each multiplexing unit being arranged to multiplex *n* first WDM data streams into one second data stream, and
- a switching unit (108,110;518) arranged, in use, to selectively cross connect any *n* first WDM data streams originating from one or more of the network elements of the WDM network destined for any same one of said other network elements to one of the multiplexing units for multiplexing into one said second data stream.

2. A network hub structure as claimed in claim 1, wherein the first bit rate WDM data streams are 1 Gbit/s Gigabit Ethernet data streams, and the second bit rate data streams are 2.488 Gbit/s SONET/SDH (OC48) data streams.

3. A network hub structure as claimed in claim 1 or 2, wherein each multiplexing unit is arranged to de-multiplex an incoming second data stream from the second network into *n* outgoing first WDM data streams destined for network elements on the first WDM network, and the switching unit (108,110;518) is arranged to cross connect said outgoing first WDM data streams to a WDM unit of the network hub structure for multiplexing the outgoing first WDM data streams onto the first WDM network.

4. A network hub structure as claimed in claim 3, wherein each multiplexing unit (108,110;518) comprises a tagging unit (406) for tagging each first WDM data stream, and for allocating a wavelength to each outgoing first WDM data stream based on tags on the inc oming second data stream.

5. A network hub structure as claimed in any of claims 1 to 4, wherein each multiplexing unit is incorporated in a Line Interface Card (132) interfacing to a core hub on the second network.

6. A network hub structure as claimed in claim 5, wherein the network hub structure further comprises a plurality of Trunk Interface Cards (102,120) disposed before the switching unit (108,110;518) for interfacing to the first WDM network.

7. A network hub structure as claimed in any preceding claim, wherein the network hub structure further comprises a redundant switching unit (110) for fault protection, the redundant switching unit being arranged, in case of a fault in the primary switching unit (108), to selectively cross connect the any *n* first WDM data streams originating from one or more of the network elements of the WDM network destined for the any same one of said other network elements to the one of the multiplexing units for multiplexing into one said second data stream.

8. A network hub structure as claimed in any preceding claim, wherein the second network is a second WDM network.

9. A network hub structure as claimed in any preceding claim, wherein each multiplexing unit (314) comprises a 2xGbE/OC48 Packet Over SONET (POS) multiplexer unit.

10. A network hub structure as claimed in any of claims 1 to 9, wherein each multiplexing unit comprises a SONET time division multiplexing (TDM) multiplexer unit.

11. A network hub structure as claimed in claim 10, wherein the SONET TDM multiplexer units (314) are arranged, in use, to first decode 1.25 Gbit/s 8b/10b encoded GbE streams to produce two 1 Gbit/s streams, and to then multiplex the two 1 Gbit/s streams into SONET Virtual Containers.

12. A network hub structure as claimed in claim 10, wherein the SONET TDM multiplexer units (314) are arranged, in use, to first decode the 1.25 Gbit/s 8b/10b encoded Gb E streams to produce two 1 Gbit/s streams, and to then multiplex the two 1 Gbit/s streams into a SONET frame in alternate time slots.

13. A network hub structure as claimed in claim 12, wherein the SONET TDM multiplexer units (314) are arranged in a manner such that, in use, additional filler bytes are being inserted to match to the capacity of the SONET frame.

14. A network hub structure as claimed in claim 10, wherein the SONET TDM multiplexer units (314) are further arranged in a manner such that, in use, the decoded GbE streams are being re-encoded utilising a 5b/6b line code to produce 1.2 Gbit/s streams, before employing the multiplexing into the 2.488 Gbit/s OC 48 data streams.

15. A method for connecting network elements of a first WDM (106;600) network supporting a first bit rate WDM data stream to other network elements (624,626) on a second optical network (602) supporting a second bit rate data stream which is substantially a multiple *n* of the first bit rate; the method comprising the step of selectively multiplexing any *n* first WDM data streams originating from one or more of the network elements of the WDM network destined for any same one of said other network elements into one said second data stream.

16. A method as claimed in claim 15, wherein the first bit rate WDM data streams are 1 Gbit/s Gigabit Ethernet data streams, and the second bit rate data streams are 2.488 Gbit/s SONET/SDH (OC48) data streams.

17. A method as claimed in claim 15 or 16, wherein the method further comprises the step of de-multiplexing an incoming second data stream from the second network into *n* outgoing first WDM data streams destined for one or more network elements on the first WDM network and multiplexing the outgoing first WDM data streams onto the first WDM network.

18. A method as claimed in claim 17, wherein the method comprises the steps of tagging each first WDM data stream, and allocating a wavelength to each outgoing first WDM data stream based on tags on the incoming second data streams.
